# EUROPEAN PATENT SPECIFICATION

(11) **EP 2 760 178 B1**
(45) Date of publication and mention of the grant of the patent: **24.08.2016**
(21) Application number: 13801454.3
(22) Date of filing: 24.04.2013
(51) Int. Cl.: H04L 29/06, H04L 29/08

(54) **METHOD, APPARATUS AND SYSTEM FOR OBTAINING OBJECT**
VERFAHREN, VORRICHTUNG UND SYSTEM ZUR BESCHAFFUNG VON OBJEKTEN
PROCÉDÉ, APPAREIL ET SYSTÈME POUR OBTENIR UN OBJET

(30) Priority: 16.11.2012 CN 201210464619
(43) Date of publication of application: 30.07.2014
(73) Proprietor: Huawei Technologies Co., Ltd., Longgang District Shenzhen, Guangdong 518129 (CN)
(72) Inventor: ZHANG, Yong, Shenzhen Guangdong 518129 (CN)
(74) Representative: Gill Jennings & Every LLP
(86) International application number: PCT/CN2013/074653
(87) International publication number: WO 2014/075427

(56) References cited:
- CN-A- 102 255 872
- CN-A- 102 541 876
- CN-A- 102 984 138
- US-A1- 2010 251 144
- US-A1- 2012 102 461
- Michael Hanson: "SPDY", open-mike: Mike Hanson's blog, 13 November 2009 (2009-11-13), XP055144205, Retrieved from the Internet: URL:http://www.open-mike.org/entry/spdy [retrieved on 2014-10-02]
- Larry: "The future of caching", GarfieldTech, 7 October 2011 (2011-10-07), XP055144165, Retrieved from the Internet: URL:http://www.garfieldtech.com/blog/cachi ng-tng [retrieved on 2014-10-02]
- BELSHE TWIST R PEON GOOGLE M ET AL: "SPDY Protocol; draft-mbelshe-httpbis-spdy-00.txt", SPDY PROTOCOL; DRAFT-MBELSHE-HTTPBIS-SPDY-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 23 February 2012 (2012-02-23), pages 1-51, XP015080780, [retrieved on 2012-02-23]
- Abel Avram: "Google and Microsoft Want to Improve HTTP", infoq, 24 May 2012 (2012-05-24), XP055144192, Retrieved from the Internet: URL:http://www.infoq.com/news/2012/05/Goog le-Microsoft-HTTP [retrieved on 2014-10-02]

## Description

### TECHNICAL FIELD

The present invention relates to the field of communications, and in particular, to a method, an apparatus, and a system for acquiring an object.

### BACKGROUND

In a communication model with a C/S (client/server) architecture, when a client requests an object from a server, the object requested by the client generally has a lot of associated objects, that is, various objects associated with the object requested by the client. For example, when the client requests a Web page, the client can acquire complete data of the Web page requested by the client only after acquiring all other information associated with the Web page (for example, data of sub-pages). The other information herein may be called associated objects herein. Therefore, the client needs to undergo a number of request-response processes between the client and the server before it can acquire the complete requested object. With the development of network technologies, communication between networks becomes more and more complex. Therefore, when the client requests an object, the number of requests and responses between the client and the server is also increasing. Considering the current limited bandwidth, this obviously increases the burden of the network, leading to a network communication delay.

To solve the above problem, the prior art generally uses a client caching technology, that is, some objects are temporarily stored on the client. When the client requests an object from the server, if the object requested by the client exists in the cache of the client, the client directly acquires the object from the cache. Document "SPDY" by Michael Hanson, which can be retrieved from the Internet URL: http://www.open-mike.org/entry/spdy discloses multiplexing Requests and Responses on a single TCP connection between the client and the server. The server has the option of initiating "server push", by delivering some responses that the client did not ask for, but will be needed. Further, D1 discloses that the server push an object manifest to the client, which would allow the client to make a single request for all the objects that it doesn't have cached yet.

However, during the implementation of the present invention, it is found that, according to the solution in the prior art, before the client directly uses an object in the cache, the client still needs to query the server whether the object expires, and then the client determines, according to a response sent by the server, whether to directly use the object in the cache. That is to say, according to the solution in the prior art, even if the object requested by the client exists in the cache of the client, several request-response processes are still needed between the client and the server. Therefore, by using the solution in the prior art, network data traffic will still increase, leading to a network communication delay.

### SUMMARY

Embodiments of the present invention provide a method, an apparatus, and a system for acquiring an object to reduce network data traffic and a network communication delay.

To achieve the foregoing objective, the embodiments of the present invention use the following technical solutions:
In a first aspect, a method for acquiring an object according to an embodiment of the present invention includes:
   Receiving, by a server, a request of a client, where the request includes identifier information of a target object requested by the client;
   determining, according to the identifier information of the target object, whether the target object has one or more associated objects;
   when the target object has one or more associated objects, adding association indication information to the target object, and sending the target object to the client, so that the client continues to wait for receiving data after receiving the target object; wherein the association indication information is used to indicate to the client that the target object has one or more associated objects;
   after finishing sending the target object, sending verification information to the client, so that the client verifies the associated objects of the target object according to the verification information;
   receiving, by the server, verification result information from the client;
   determining, by the server, according to verification result information of the client, a target associated object from the associated objects; and
   sending the target associated object to the client.

With reference to the first aspect, in a first possible implementation manner, the determining, according to the request, whether the target object has one or more associated objects includes:
transferring the request to an upper layer application, so that the upper layer application determines, according to the identifier information of the target object, whether to invoke a predetermined interface; and
determining, according to an invocation situation of the predetermined interface, whether the target object has one or more associated objects;
or, querying, according to the identifier information of the target object, for an association table used to store information of associated objects of the target object, and determining, according to a query result, whether the target object has one or more associated objects.

With reference to the first aspect or the first possible implementation manner of the first aspect, in a second possible implementation manner, the association indication information is located in a last frame of the target object; and the verification information of the associated objects includes address information and relative expiry time of the associated objects.

With reference to the first aspect or the first possible implementation manner of the first aspect, in a third possible implementation manner,
the verification result information includes address information of an associated object that does not need to be sent; and the determining, according to verification result information of the client, a target associated object from the associated objects includes:
removing, according to the verification result information, the associated object that does not need to be sent to the client from the associated objects, and determining a remaining associated object as a target associated object;
or, the verification result information includes address information of an associated object that needs to be sent; and the determining, according to verification result information of the client, a target associated object from the associated objects includes:
   confirming, according to the address information of the associated object that needs to be sent, accuracy of the verification result information, and determining a target associated object from the associated objects according to a confirmation result.

In a second aspect, a method for acquiring an object according to an embodiment of the present invention includes:
sending, by a client, a request to a server, where the request includes identifier information of a requested target object;
receiving a target object which is sent by the server after the server receives the request, where the target object carries association indication information, where the association indication information is used to indicate that the target object has one or more associated objects;
receiving verification information of the associated objects which is sent by the server;
verifying, by the client, the associated objects according to the verification information, and sending verification result information to the server, so that the server determines a target associated object according to the verification result information; and
receiving the target associated object sent by the server.

In a first possible implementation manner of the second aspect, the verification information of the associated objects includes address information and relative expiry time of the associated objects; and the verifying the associated objects according to the verification information includes:
determining, according to the address information of the associated objects, whether a corresponding associated object is temporarily stored locally;
if a corresponding associated object is temporarily stored locally and a sum of existence time of the corresponding associated object and relative expiry time of the corresponding associated object is greater than a current time, determining that the server does not need to send the corresponding associated object; or
if a corresponding associated object is temporarily stored locally and a sum of existence time of the corresponding associated object and relative expiry time of the corresponding associated object is less than a current time, determining that the server needs to send the corresponding associated object.

With reference to the second aspect or the first possible implementation manner of the second aspect, in a second possible implementation manner of the second aspect, the verification result information includes:
address information of a corresponding associated object that does not need to be sent by the server or address information of a corresponding associated object that needs to be sent by the server.

In a third aspect, a server according to an embodiment of the present invention includes:
a receiving unit, configured to receive a request of a client, where the request includes identifier information of a target object requested by the client;
a judging unit, configured to determine, according to the identifier information of the target object received by the receiving unit, whether the target object has one or more associated objects;
a sending unit, configured to: when the judging unit determines that the target object has one or more associated objects, add association indication information to the target object, and send the target object to the client, so that the client continues to wait for receiving data after receiving the target object, wherein the association indication information is used to indicate to the client that the target object has one or more associated objects; and after finishing sending the target object, send verification information to the client, so that the client verifies the associated objects of the target object according to the verification information, and wherein the receiving unit (41) is further configured to receive verification result information from the client; and
a selecting unit, configured to determine a target associated object from the associated objects according to verification result information of the client received by the receiving unit;
where:
the sending unit is further configured to send the target associated object to the client according to a processing result of the selecting unit.

In a first possible implementation manner of the third aspect, the judging unit includes:
a transferring module, configured to transfer the request to an upper layer application, so that the upper layer application determines, according to the identifier information of the target object, whether to invoke a predetermined interface; and
a processing module, configured to determine, when the upper layer application invokes the predetermined interface, that the target object has one or more associated objects, and determine, when the upper layer application does not invoke the predetermined interface, that the target object does not have an associated object, where, when the upper layer application determines, according to the identifier information of the target object, that there are one or more associated objects, the upper layer application invokes the predetermined interface; and when the upper layer application determines, according to the identifier information of the target object, that there is no associated object, the upper layer application does not invoke the predetermined interface.

With reference to the third aspect, in a second possible implementation manner of the third aspect, the judging unit includes:
a querying module, configured to query, according to the identifier information of the target object, for an association table used to store information of associated objects of the target object; and
a processing module, configured to determine, according to a query result of the querying module, whether the target object has one or more associated objects.

With reference to the third aspect or the first or second possible implementation manner of the third aspect, in a third possible implementation manner of the third aspect, the selecting unit is specifically configured to:
when the verification result information includes address information of an associated object that does not need to be sent, remove, according to the verification result information, the associated object that does not need to be sent to the client from the associated objects, and determine a remaining associated object as a target associated object;
or, when the verification result information includes address information of an associated object that needs to be sent, confirm, according to the address information of an associated object that needs to be sent, accuracy of the verification result information, and determine a target associated object from the associated objects according to a confirmation result.

In a fourth aspect, a client according to an embodiment of the present invention includes:
a sending unit, configured to send a request to a server, where the request includes identifier information of a requested target object;
a receiving unit, configured to receive a target object which is sent by the server after the server receives the request, where the target object carries association indication information, where the association indication information is used to indicate that the target object has one or more associated objects; and receive verification information of the associated objects sent by the server; and
a processing unit, configured to verify the associated objects according to the verification information received by the receiving unit; where:
   the sending unit is further configured to send verification result information to the server according to a verification result of the processing unit, so that the server determines a target associated object according to the verification result information; and
   the receiving unit is further configured to receive the target associated object sent by the server.

In a first possible implementation manner of the fourth aspect, the verification information of the associated objects includes address information and relative expiry time of the associated objects; and the processing unit includes:
a detecting module, configured to determine, according to the address information of the associated objects, whether the client temporarily stores a corresponding associated object;
a comparing module, configured to: when the detecting module determines that a corresponding associated object is temporarily stored, compare a sum of existence time of the corresponding associated object and relative expiry time of the corresponding associated object with a current time; and
a determining module, configured to: when the comparing module determines that the sum of the existence time of the corresponding associated object and the relative expiry time of the corresponding associated object is greater than the current time, determine that the server does not need to send the corresponding associated object; and when the comparing module determines that the sum of the existence time of the corresponding associated object and the relative expiry time of the corresponding associated object is less than the current time, determine that the server needs to send the corresponding associated object.

With reference to the fourth aspect or the first possible implementation manner of the fourth aspect, in a second possible implementation manner of the fourth aspect, the verification result information includes:
address information of a corresponding associated object that does not need to be sent by the server or address information of a corresponding associated object that needs to be sent by the server.

In a fifth aspect, a system for acquiring an object according to an embodiment of the present invention includes:
a server, including the apparatus for acquiring an object in the third aspect; and
a client, including the apparatus for acquiring an object in the fourth aspect.

By using the method, the apparatus, and the system for acquiring an object, after a server receives a request of a client, the server determines, according to the request of the client, whether a target object has one or more associated objects; when determining that the target object has one or more associated objects, the server adds association indication information to the target object, where the association indication information is used to indicate to the client that the target object has one or more associated objects. After receiving the target object that carries the association indication information and determining that the target object carries the association indication information, the client verifies the associated objects according to verification information of the associated objects which is sent by the server, and sends verification result information to the server, so that the server determines a target associated object according to the verification result information, and sends the target associated object to the client.

As can be seen from the foregoing process, when determining that the object requested by the client has one or more associated objects, the server adds association indication information to the object sent to the client to indicate to the client that the object requested by the client has one or more associated objects. Therefore, different from the prior art where the client needs to request associated objects from the server one by one, after acquiring the association indication information, the client verifies the associated objects according to the verification information of the associated objects of the server, and then the server determines a target associated object according to the verification result information, and sends the target associated object to the client. Therefore, by using the method, the apparatus, and the system according to the embodiments of the present invention, the number of requests-responses between the server and the client can be greatly reduced, thereby reducing the network data traffic and the network communication delay.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a flowchart of a method for acquiring an object according to Embodiment 1 of the present invention;
FIG. 2 is a flowchart of a method for acquiring an object according to Embodiment 2 of the present invention;
FIG. 3 is a flowchart of a method for acquiring an object according to Embodiment 3 of the present invention;
FIG. 4 is a schematic diagram of a server according to Embodiment 4 of the present invention;
FIG. 5 is a schematic diagram of a client according to Embodiment 5 of the present invention;
FIG. 6 is a schematic diagram of a system for acquiring an object according to Embodiment 6 of the present invention; and
FIG. 7 is a schematic structural diagram of a remote control device according to Embodiment 7 of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person skilled in the art based on the embodiments of the present invention without creative efforts shall fall within the protection scope of the present invention.

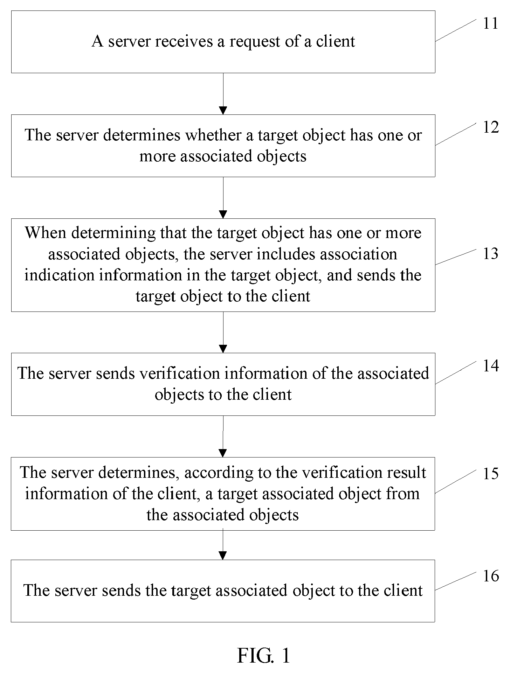

As shown in FIG. 1, a method for acquiring an object according to Embodiment 1 of the present invention includes the following steps:
Step 11: A server receives a request of a client, where the request includes identifier information of a target object requested by the client.
   The identifier information of the target object requested by the client may be information that can identify the target object, for example, a name of the target object requested by the client.
Step 12: The server determines, according to the identifier information of the target object, whether the target object has one or more associated objects.
   The server herein can determine, in at least the following two manners, whether the target object has one or more associated objects.

Manner 1: The server determines whether the target object has one or more associated objects in a passive discovery mode. That is, the server determines, according to a processing result of an upper layer application, whether the target object has one or more associated objects. In the embodiment of the present invention, a predetermined interface is provided between a software layer where the server is located and an upper layer application (for example, the application layer). After receiving the request of the client, the sever transfers the request to the upper layer application. Therefore, the server can acquire the identifier information of the target object carried in the request, and the upper layer application may also acquire the identifier information of the target object. The upper layer application determines, according to the identifier information of the target object, whether to invoke the predetermined interface. Specifically, the upper layer application determines whether there are one or more associated objects according to settings of the upper layer application. When determining, according to the identifier information of the target object, that there are one or more associated objects, the upper layer application invokes the predetermined interface. In this way, the server can determine, according to the information that the upper layer application invokes the predetermined interface, that the target object has one or more associated objects. Otherwise, the upper layer application does not invoke the interface, and the server can determine that the target object does not have an associated object.

Manner 2: The server queries, according to the identifier information of the target object, for an association table used to store information of associated objects of the target object, and determines, according to a query result, whether the target object has one or more associated objects.

Compared with the manner 2, manner 1 has better universality. In addition, in the embodiment of the present invention, there may be one or more associated objects.

Step 13: When the target object has one or more associated objects, the server adds association indication information to the target object, and sends the target object to the client, so that the client continues to wait for receiving data after receiving the target object.

The server sends, according to the request of the client, the target object to the client. When determining, according to the processing result of the upper layer application, that there are associated objects, the server adds association indication information to the target object. The association indication information is used to indicate to the client that the target object has one or more associated objects.

The association indication information may be located in any one frame of the target object. However, to ease the pressure of the client in searching the target object for the association indication information and increase the search efficiency, the association indication information may be located in a last frame of the target object.

If the target object carries the association indication information, the client continues to wait for next data sent by the server rather than sends another request to the server in the prior art.

Step 14: After finishing sending the target object, the server sends verification information to the client, so that the client verifies the associated objects of the target object according to the verification information.

In this step, the verification information of the associated objects includes address information and relative expiry time of the associated objects. The address information of an associated object is an abstract representation of storage location information of the associated object in the server. According to different manifestations of the associated objects, the address information of the associated objects has different manifestations. For example, if an associated object is a file, the address information of the associated object may be a storage path of the file.

Step 15: The server determines, according to the verification result information of the client, a target associated object from the associated objects.

After performing verification according to the verification information, the client sends verification result information to the server. The client may temporarily store some objects, where the temporarily stored objects may not have expired, or may have already expired. When the objects temporarily stored in the client have not expired, the server does not need to send these objects to the client again. Among these associated objects, associated objects really needed by the client are target associated objects herein. Therefore, the verification result information of the client may be address information of an associated object that does not need to be sent or address information of an associated object that needs to be sent. In this embodiment, the address information of an associated object that does not need to be sent may be stored in a "negative address number list", while the address information of an associated object that needs to be sent may be stored in a "positive address number list".

When the verification result information includes the address information of an associated object that does not need to be sent, the server removes, according to the verification result information, the associated object that does not need to be sent by the client from the associated objects, and determines a remaining associated object as a target associated object.

When the verification result information includes address information of an associated object that needs to be sent, the server confirms, according to the address information of an associated object that needs to be sent, accuracy of the verification result information, and determines a target associated object from the associated objects according to a confirmation result. The confirming the accuracy of the verification result information refers to confirming whether the client really needs the associated object that needs to be sent; when confirming that the client really needs the associated object that needs to be sent, the server selects the associated object needed by the client as a target associated object; when confirming that the client does not really need the associated object that needs to be sent, the server removes the associated object that does not need to be sent to the client from the associated objects, and determines a remaining associated object as a target associated object. As can be seen from this process, compared with a case that the verification result information includes the address information of an associated object that does not need to be sent, in this case, the server needs to verify, according to the verification result information of the client, whether the address information of an associated object that needs to be sent and is sent by the client is accurate, that is, the server determines whether information of an associated object that needs to be sent and is determined by the client is correct.

Step 16: The server sends the target associated object to the client.

After determining the target associated object, the server sends the target associated object to the client. After acquiring the target associated object, the client can acquire a complete requested target object.

As can be seen from the foregoing process, when determining that the object requested by the client has one or more associated objects, the server adds association indication information to the object sent to the client to indicate to the client that the object requested by the client has one or more associated objects. Therefore, different from the prior art where the client needs to request associated objects from the server one by one, after acquiring the association indication information, the client verifies the associated objects according to the verification information of the associated objects of the server, and then the server determines a target associated object according to the verification result information, and sends the target associated object to the client. Therefore, by using the method according to Embodiment 1 of the present invention, the number of requests-responses between the server and the client can be greatly reduced, thereby reducing network data traffic and a network communication delay.

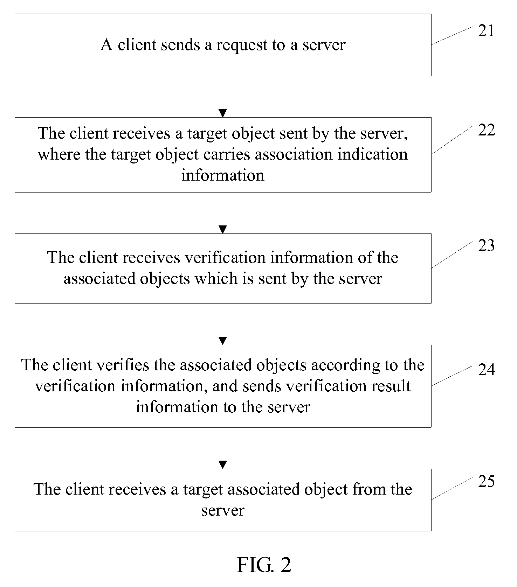

As shown in FIG. 2, a method for acquiring an object according to Embodiment 2 of the present invention includes the following steps:
Step 21: A client sends a request to a server, where the request includes identifier information of a requested target object.
   The identifier information of the target object has the same meaning as that described in step 11.
Step 22: The client receives a target object which is sent by the server after the server receives the request, where the target object carries association indication information, where the association indication information is used to indicate that the target object has one or more associated objects.
   After receiving the target object sent by the server, the client firstly parses the target object to acquire the association indication information carried in the target object, and then determines that the target object has one or more associated objects.
Step 23: The client receives verification information of the associated objects which is sent by the server.
   According to the description in Embodiment 1, the server generally includes the association indication information in a last frame of the target object. Therefore, in this step, when the client determines, by reading the association indication information in the last frame of the target object, that the target object has one or more associated objects, the client does not continue to send a request to the server, but waits for verification information of the associated objects which is sent by the server, so that the client receives the verification information of the associated objects which is sent by the server.
   As described in Embodiment 1, the verification information of the associated objects includes address information and relative expiry time of the associated objects.
Step 24: The client verifies the associated objects according to the verification information, and sends verification result information to the server, so that the server determines a target associated object according to the verification result information.
   In this step, the client firstly determines, according to the address information of the associated objects, whether the client temporarily stores associated objects corresponding to the address information of the associated objects. If a corresponding associated object is temporarily stored, the client compares a sum of existence time of the corresponding associated object and relative expiry time of the corresponding associated object with a current time; if the sum of the existence time of the corresponding associated object and the relative expiry time of the corresponding associated object is greater than the current time, the client determines that the server does not need to send the corresponding associated object; or if the sum of the existence time of the corresponding associated object and the relative expiry time of the corresponding associated object is less than the current time, the client determines that the server needs to send the corresponding associated object.
   Therefore, the verification result information of the client may include the following two types of information: address information of an associated object that does not need to be sent and address information of an associated object that needs to be sent. As described in the foregoing, in this embodiment, the address information of an associated object that does not need to be sent may be stored in a "negative address number list", while the address information of an associated object that needs to be sent may be stored in a "positive address number list".
Step 25: The client receives the target associated object sent by the server.

As can be seen from the foregoing process, when determining that the object requested by the client has one or more associated objects, the server adds association indication information to the object sent to the client to indicate to the client that the object requested by the client has one or more associated objects. Therefore, different from the prior art where the client needs to request associated objects from the server one by one, after acquiring the association indication information, the client verifies the associated objects according to the verification information of the associated objects of the server, and then the server determines a target associated object according to the verification result information, and sends the target associated object to the client. Therefore, by using the method according to Embodiment 2 of the present invention, the number of requests-responses between the server and the client can be greatly reduced, thereby reducing network data traffic and a network communication delay.

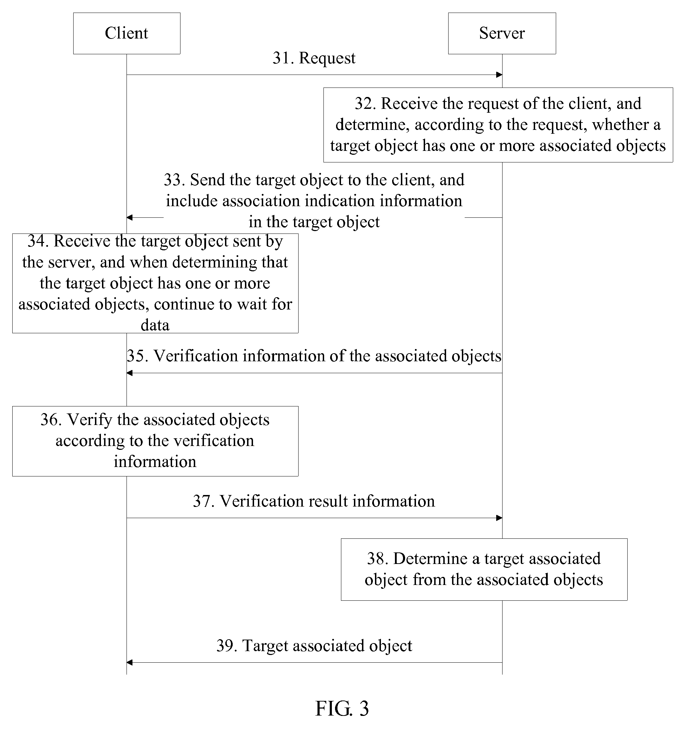

With reference to Embodiment 3, the following describes a specific process of a method for acquiring an object according to the embodiments of the present invention. As shown in FIG. 3, a method for acquiring an object according to Embodiment 3 of the present invention includes the following steps:
Step 31: A client sends a request to a server, where the request includes identifier information of a requested target object.
Step 32: The server receives the request of the client, and determines, according to the request, whether the target object has one or more associated objects.
Step 33: When determining that the target object has one or more associated objects, the server adds association indication information to the target object, and sends the target object to the client, where the association indication information is used to indicate to the client that the target object has one or more associated objects. The association indication information is located in a last frame of the target object.
Step 34: The client receives the target object sent by the server, and when determining that the target object has one or more associated objects according to the association indication information, the client continues to wait for data.
Step 35: The server sends verification information of the associated objects to the client, where the verification information of the associated objects includes address information and relative expiry time of the associated objects.
Step 36: The client receives the verification information of the associated objects which is sent by the server, and verifies the associated objects according to the verification information.
Step 37: The client sends verification result information to the server, where the verification result information includes address information of a corresponding associated object that does not need to be sent by the server.
Step 38: The server determines, according to the verification result information of the client, a target associated object from the associated objects, and removes the associated object that does not need to be sent by the client.
Step 39: The server sends the target associated object to the client.

It should be noted that the foregoing process is an iteration process. When a target associated object sent by the server has other associated objects, the foregoing process may be repeated to send target associated objects of the other associated objects. In addition, the address information and relative expiry time of the associated objects included in the verification information of the associated objects may be sent to the client by using one message or by using two messages.

It can be seen from the above that, by using the method according to Embodiment 3 of the present invention, the number of requests-responses between the server and the client can be greatly reduced, thereby reducing network data traffic and a network communication delay.

In specific applications, the method according to the embodiments of the present invention may be applied to improving the existing hyper text transport protocol (http). A Web application based on the http protocol is one of the most extensively deployed Internet applications. The protocol mainly has the following features: (1) a client needs to send a request to the server to acquire needed data even if the data already exists in a cache of the client; (2) if the client wants to acquire a large quantity of data, for example, 70 files, the client needs to send requests to the server one by one to acquire all the data.

According to the method in the embodiment of the present invention, when a client requests a Web page, a server determines that the Web page requested by the client has a lot of sub-pages that need to be sent to the client. In this case, when responding to the request of the client, the server adds association indication information to a last frame of the Web page data to indicate that the Web page has associated sub-pages, that is, the server will send other files to the client. Then, the server sends an address list and a relative expiry time list of the associated sub-pages to the client. After performing verification according to the address list and the relative expiry time list of the associated sub-pages, the client may return a negative address number list to the server. The server can thereby remove, according to the negative address number list, sub-pages corresponding to negative addresses, and then send other sub-pages to the client. Meanwhile, because the http is not necessarily a permanent connection, the server needs to add a Keep-Alive header field to a header when responding to the request of the client.

Assuming that there are originally 70 requests between the client and the server, by using the method according to the embodiments of the present invention, the requests between the client and the server will be changed to one request of the client and one response to the server, thereby reducing 98 data transmissions from the client to the server.

In addition, the method according to the embodiment of the present invention can also be applied to improving the existing SPDY (speedy, speedy) protocol. The SPDY protocol is a new generation web protocol launched by GOOGLE. A push (push) mechanism is already adopted in the protocol, but no specific implementation process is provided. By using the method according to the embodiment of the present invention, the push mechanism in the SDPY protocol can be well implemented.

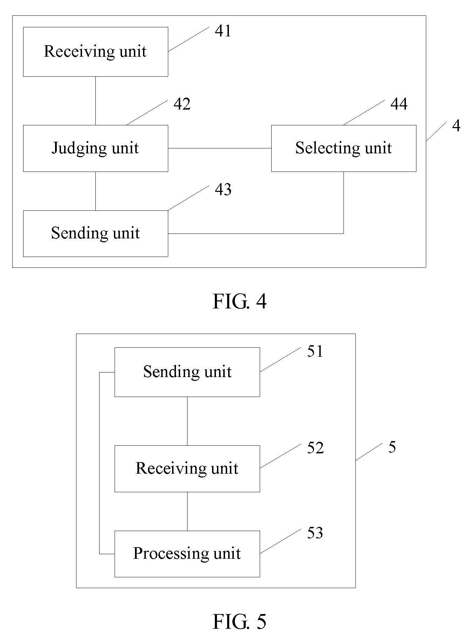

As shown in FIG. 4, a server 4 according to a fourth embodiment of the present invention includes:
a receiving unit 41, configured to receive a request of a client, where the request includes identifier information of a target object requested by the client; a judging unit 42, configured to determine, according to the identifier information of the target object received by the receiving unit 41, whether the target object has one or more associated objects ; a sending unit 43, configured to: when the judging unit 42 determines that the target object has one or more associated objects , add association indication information to the target object, and send the target object to the client, so that the client continues to wait for receiving data after receiving the target object; and after finishing sending the target object, send verification information of the associated objects to the client, so that the client verifies the associated objects according to the verification information; and a selecting unit 44, configured to determine, according to verification result information of the client received by the receiving unit 41, a target associated object from the associated objects, where the sending unit 43 is further configured to send the target associated object to the client according to a processing result of the selecting unit 44.

The judging unit 42 may include:
a transferring module, configured to transfer the request to an upper layer application, so that the upper layer application determines, according to the identifier information of the target object, whether to invoke a predetermined interface; a processing module, configured to determine, when the upper layer application invokes the predetermined interface, that the target object has one or more associated objects , and determine, when the upper layer application does not invoke the predetermined interface, that the target object does not have associated objects, where, when the upper layer application determines, according to the identifier information of the target object, that there are associated objects, the upper layer application invokes the predetermined interface; and when the upper layer application determines, according to the identifier information of the target object, that there is no associated object, the upper layer application does not invoke the predetermined interface.

Or, the judging unit 42 may include:
a querying module, configured to query, according to the identifier information of the target object, for an association table used to store information of associated objects of the target object, and a processing module, configured to determine, according to a query result of the querying module, whether the target object has one or more associated objects.

As described in the foregoing method embodiment, the association indication information may be located in a last frame of the target object, and the verification information of the associated objects may include address information and relative expiry time of the associated objects.

The selecting unit 44 may be specifically configured to: when the verification result information includes address information of an associated object that does not need to be sent, remove, according to the verification result information, the associated object that does not need to be sent to the client from the associated objects, and determine a remaining associated object as a target associated object;
or, when the verification result information includes address information of an associated object that needs to be sent, confirm, according to the address information of an associated object that needs to be sent, accuracy of the verification result information, and determine a target associated object from the associated objects according to a confirmation result. The confirming the accuracy of the verification result information refers to confirming whether the client really needs the associated object that needs to be sent; when confirming that the client really needs the associated object that needs to be sent, the selecting unit 44 selects the associated object needed by the client as a target associated object; when confirming that the client does not really need the associated object that needs to be sent, the selecting unit 44 removes the associated object that does not need to be sent to the client from the associated objects, and determines a remaining associated object as a target associated object.

As can be seen from the foregoing description, when determining that the object requested by the client has one or more associated objects, the server adds association indication information to the object sent to the client to indicate to the client that the object requested by the client has one or more associated objects. Therefore, different from the prior art where the client needs to request associated objects from the server one by one, after acquiring the association indication information, the client verifies the associated objects according to the verification information of the associated objects of the server, and then the server determines a target associated object according to the verification result information, and sends the target associated object to the client. Therefore, by using the apparatus according to Embodiment 4 of the present invention, the number of requests-responses between the server and the client can be greatly reduced, thereby reducing network data traffic and a network communication delay.

As shown in FIG. 5, a client 5 according to Embodiment 5 of the present invention includes:
a sending unit 51, configured to send a request to a server, where the request includes identifier information of a requested target object; a receiving unit 52, configured to receive a target object which is sent by the server after the server receives the request, where the target object carries association indication information, where the association indication information is used to indicate that the target object has one or more associated objects ; and receive verification information of the associated objects sent by the server; and a processing unit 53, configured to verify the associated objects according to the verification information received by the receiving unit 52, where the sending unit 51 is further configured to send verification result information to the server according to a verification result of the processing unit 53, so that the server determines a target associated object according to the verification result information; and the receiving unit 52 is further configured to receive the target associated object sent by the server.

The verification information of the associated objects includes address information and relative expiry time of the associated objects. The processing unit 53 may include: a detecting module, configured to determine, according to the address information of the associated objects, whether the client temporarily stores corresponding associated objects; a comparing module, configured to: when the detecting module determines that a corresponding associated object is temporarily stored, compare a sum of existence time of the corresponding associated object and relative expiry time of the corresponding associated object with a current time; and a determining module, configured to: when the comparing module determines that the sum of the existence time of the corresponding associated object and the relative expiry time of the corresponding associated object is greater than the current time, determine that the server does not need to send the corresponding associated object; and when the comparing module determines that the sum of the existence time of the corresponding associated object and the relative expiry time of the corresponding associated object is less than the current time, determine that the server needs to send the corresponding associated object.

As described in the foregoing, the verification result information may include address information of a corresponding associated object that does not need to be sent by the server or address information of a corresponding associated object that needs to be sent by the server.

As can be seen from the foregoing description, when determining that the object requested by the client has one or more associated objects, the server adds association indication information to the object sent to the client to indicate to the client that the object requested by the client has one or more associated objects. Therefore, different from the prior art where the client needs to request associated objects from the server one by one, after acquiring the association indication information, the client verifies the associated objects according to the verification information of the associated objects of the server, and then the server determines a target associated object according to the verification result information, and sends the target associated object to the client. Therefore, by using the apparatus according to Embodiment 5 of the present invention, the number of requests-responses between the server and the client can be greatly reduced, thereby reducing network data traffic and a network communication delay.

For details about working principles of the apparatus according to the embodiment of the present invention, reference may be made to the description of the foregoing method embodiments.

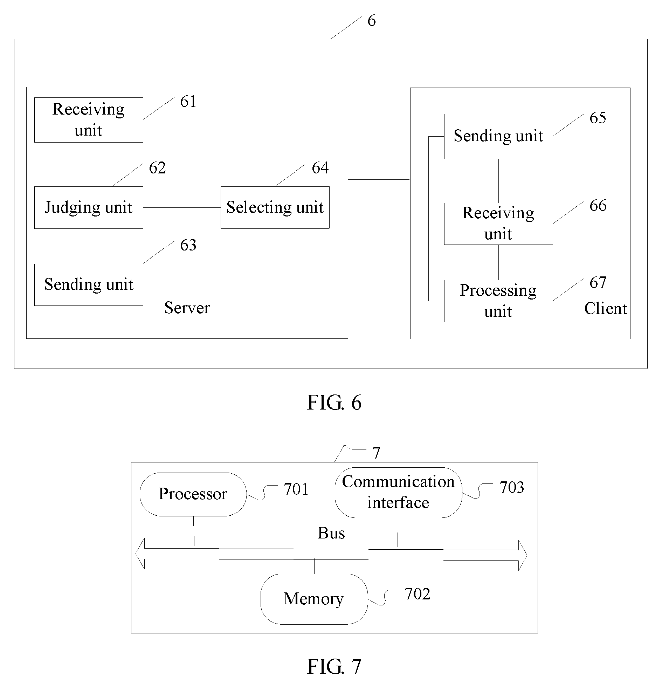

In addition, as shown in FIG. 6, Embodiment 6 of the present invention also provides a system for acquiring an object, including a server and a client. For details about components and working principles of the server, reference may be made to the components and working principles of the server illustrated in FIG. 4; and for details about components and working principles of the client, reference may be made to the components and working principles of the client illustrated in FIG. 5.

FIG. 7 is a schematic structural diagram of a remote control device according to Embodiment 7 of the present invention. As shown in FIG. 7, the remote control device 7 according to this embodiment includes at least one processor 701, a memory 702, a communication interface 703, and a bus. The processor 701, the memory 702, and the communication interface 703 are connected and implement mutual communications through the bus. The bus may be an industry standard architecture (Industry Standard Architecture, ISA for short) bus, a peripheral component interconnect (PCI) bus, an extended industry standard architecture (Extended Industry Standard Architecture, EISA for short) bus, or the like. The bus may be divided into an address bus, a data bus, a control bus, and the like. For the ease of illustration, the bus is represented by using only one bold line in FIG. 7, but this does not mean that there is only one bus or only one type of bus.

The memory 702 is configured to store an executable program code, where the program code includes computer operation instructions. The memory 702 may include a high speed RAM memory, and may further include a non-volatile memory, for example, at least one magnetic disk memory.

In one embodiment, the processor 701 runs, by reading the executable program code stored in the memory 702, a program corresponding to the executable program code to:
receive a request of a client, where the request includes identifier information of a target object requested by the client;
determine, according to the identifier information of the target object, whether the target object has one or more associated objects ;
when the target object has one or more associated objects , add association indication information to the target object, and send the target object to the client, so that the client continues to wait for receiving data after receiving the target object;
after finishing sending the target object, send verification information to the client, so that the client verifies the associated objects of the target object according to the verification information;
determine, according to verification result information of the client, a target associated object from the associated objects; and
send the target associated object to the client.

In another embodiment, the processor 701 runs, by reading the executable program code stored in the memory 702, a program corresponding to the executable program code to:
send a request to a server, where the request includes identifier information of a requested target object;
receive a target object which is sent by the server after the server receives the request, where the target object carries association indication information, where the association indication information is used to indicate that the target object has one or more associated objects ;
receive verification information of the associated objects which is sent by the server;
verify the associated objects according to the verification information, and send verification result information to the server, so that the server determines a target associated object according to the verification result information; and
receive the target associated object sent by the server.

The processor 701 may be a central processing unit (Central Processing Unit, CPU for short), or an application specific integrated circuit (Application Specific Integrated Circuit, ASIC for short), or configured as one or more integrated circuits in the embodiment of the present invention.

It should be noted that, in addition to the foregoing functions, the processor 701 may be further configured to perform other processes in the foregoing method embodiments, which is not further described herein.

The communication interface 703 is mainly configured to implement communications between the device in this embodiment and another device or apparatus.

A person skilled in the art may understand that all or a part of the processes of the methods in the embodiments may be implemented by a computer program instructing relevant hardware. The program may be stored in a computer readable storage medium. When the program runs, the processes of the foregoing methods in the embodiments are performed. The storage medium may be a magnetic disk, an optical disk, a read-only memory (ROM), or a random access memory (RAM) or the like.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for acquiring an object, comprising:
Receiving (11), by a server, a request of a client, wherein the request comprises identifier information of a target object requested by the client;
Determining (12), according to the identifier information of the target object, whether the target object has one or more associated objects; and
**characterized in that** when the target object has one or more associated objects, adding (13) association indication information to the target object, and sending the target object to the client, so that the client continues to wait for receiving data after receiving the target object; wherein the association indication information is used to indicate to the client that the target object has one or more associated objects;
after finishing sending the target object, sending (14) verification information to the client, so that the client verifies the associated objects of the target object according to the verification information;
receiving, by the server, verification result information from the client;
determining (15), by the server, a target associated object from the associated objects according to the verification result information of the client; and
sending (16) the target associated object to the client.

2. The method according to claim 1, wherein the determining, according to the identifier information of the target object, whether the target object has one or more associated objects comprises:
transferring the request to an upper layer application, so that the upper layer application determines, according to the identifier information of the target object, whether to invoke a predetermined interface; and
determining, according to an invocation situation of the predetermined interface, whether the target object has one or more associated objects.

3. The method according to claim 1, wherein the determining, according to the identifier information of the target object, whether the target object has one or more associated objects comprises:
querying, according to the identifier information of the target object, for an association table used to store information of associated objects of the target object, and determining, according to a query result, whether the target object has one or more associated objects.

4. The method according to any one of claims 1 to 3, wherein the association indication information is located in a last frame of the target object.

5. The method according to any one of claims 1 to 3, wherein the verification information comprises address information and relative expiry time of the associated objects.

6. The method according to any one of claims 1 to 3, wherein:
the verification result information comprises address information of an associated object that does not need to be sent; and the determining, according to verification result information of the client, a target associated object from the associated objects comprises:
removing, according to the verification result information, the associated object that does not need to be sent to the client from the associated objects, and determining a remaining associated object as a target associated object;
or, the verification result information comprises address information of an associated object that needs to be sent; and the determining, according to verification result information of the client, a target associated object from the associated objects comprises:
confirming, according to the address information of the associated object that needs to be sent, accuracy of the verification result information, and determining a target associated object from the associated objects according to a confirmation result.

7. A method for acquiring an object, comprising:
Sending (21), by a client, a request to a server, wherein the request comprises identifier information of a requested target object;
Receiving (22) a target object which is sent by the server after the server receives the request; and
**characterized in that** the target object carries association indication information, wherein the association indication information is used to indicate that the target object has one or more associated objects; and
further **characterized by** receiving (23) verification information of the associated objects which is sent by the server; and
verifying (24), by the client, the associated objects according to the verification information, and sending verification result information to the server, so that the server determines a target associated object according to the verification result information; and
receiving (25) the target associated object sent by the server.

8. The method according to claim 7, wherein the verification information of the associated objects comprises address information and relative expiry time of the associated objects; and the verifying the associated objects according to the verification information comprises:
determining, according to the address information of the associated objects, whether a corresponding associated object is temporarily stored locally;
if a corresponding associated object is temporarily stored locally and a sum of existence time of the corresponding associated object and relative expiry time of the corresponding associated object is greater than a current time, determining that the server does not need to send the corresponding associated object; or
if a corresponding associated object is temporarily stored locally and a sum of existence time of the corresponding associated object and relative expiry time of the corresponding associated object is less than a current time, determining that the server needs to send the corresponding associated object.

9. The method according to claim 7 or 8, wherein the verification result information comprises:
address information of a corresponding associated object that does not need to be sent by the server or address information of a corresponding associated object that needs to be sent by the server.

10. A server, comprising:
a receiving unit (41), configured to receive a request of a client, wherein the request comprises identifier information of a target object requested by the client;
a judging unit (42), configured to determine, according to the identifier information of the target object received by the receiving unit, whether the target object has one or more associated objects;
a sending unit (43), configured to: when the judging unit determines that the target object has one or more associated objects, add association indication information to the target object, and send the target object to the client, so that the client continues to wait for receiving data after receiving the target object, wherein the association indication information is used to indicate to the client that the target object has one or more associated objects; and after finishing sending the target object, send verification information to the client, so that the client verifies the associated objects of the target object according to the verification information, and wherein the receiving unit (41) is further configured to receive verification result information from the client; and
a selecting unit (44), configured to determine a target associated object from the associated objects according to the
verification result information of the client received by the receiving unit;
wherein:
the sending unit (43) is further configured to send the target associated object to the client according to a processing result of the selecting unit.

11. The sever according to claim 10, wherein the judging unit comprises:
a transferring module, configured to transfer the request to an upper layer application, so that the upper layer application determines, according to the identifier information of the target object, whether to invoke a predetermined interface; and
a processing module, configured to determine, when the upper layer application invokes the predetermined interface, that the target object has one or more associated objects, and determine, when the upper layer application does not invoke the predetermined interface, that the target object does not have associated objects, wherein, when the upper layer application determines, according to the identifier information of the target object, that there are associated objects, the upper layer application invokes the predetermined interface; and when the upper layer application determines, according to the identifier information of the target object, that there is no associated object, the upper layer application does not invoke the predetermined interface.

12. The sever according to claim 10, wherein the judging unit comprises:
a querying module, configured to query, according to the identifier information of the target object, for an association table used to store information of associated objects of the target object; and
a processing module, configured to determine, according to a query result of the querying module, whether the target object has one or more associated objects.

13. The sever according to any one of claims 10 to 12, wherein the selecting unit is specifically configured to:
when the verification result information comprises address information of an associated object that does not need to be sent, remove, according to the verification result information, the associated object that does not need to be sent to the client from the associated objects, and determine a remaining associated object as a target associated object;
or, when the verification result information comprises address information of an associated object that needs to be sent, confirm, according to the address information of an associated object that needs to be sent, accuracy of the verification result information, and determine a target associated object from the associated objects according to a confirmation result.

14. A client, comprising:
a sending unit (51), configured to send a request to a server, wherein the request comprises identifier information of a requested target object;
a receiving unit (52), configured to receive a target object which is sent by the server after the server receives the request, wherein the target object carries association indication information, wherein the association indication information is used to indicate that the target object has one or more associated objects; and receive verification information of the associated objects sent by the server; and
a processing unit (53), configured to verify the associated objects according to the verification information received by the receiving unit; wherein:
the sending unit is (51) further configured to send verification result information to the server according to a verification result of the processing unit, so that the server determines a target associated object according to the verification result information; and
the receiving unit (52) is further configured to receive the target associated object sent by the server.

15. The client according to claim 14, wherein the verification information of the associated objects comprises address information and relative expiry time of the associated objects; and
the processing unit (53) comprises:
a detecting module, configured to determine, according to the address information of the associated objects, whether the client temporarily stores a corresponding associated object;
a comparing module, configured to: when the detecting module determines that a corresponding associated object is temporarily stored, compare a sum of existence time of the corresponding associated object and relative expiry time of the corresponding associated object with a current time; and
a determining module, configured to: when the comparing module determines that the sum of the existence time of the corresponding associated object and the relative expiry time of the corresponding associated object is greater than the current time, determine that the server does not need to send the corresponding associated object; and when the comparing module determines that the sum of the existence time of the corresponding associated object and the relative expiry time of the corresponding associated object is less than the current time, determine that the server needs to send the corresponding associated object.

16. A system for acquiring an object, comprising: a sever (4) and a client (5), wherein:
the server (4) is adapted to: receive a request of the client, wherein the request comprises identifier information of a target object requested by the client; determine, according to the identifier information of the target object, whether the target object has one or more associated objects; when it is determined that the target object has one or more associated objects, add association indication information to the target object, and send the target object to the client, and after finishing sending the target object, send verification information to the client; wherein the association indication information is used to indicate to the client that the target object has one or more associated objects;
the client (5) is adapted to: receive the target object and verification information which is sent by the server, verify the associated objects according to the verification information received by the receiving unit, and send verification result information to the server according to a verification result;
the server is further adapted to receive verification result information from the client and determine a target associated object according to the verification result information and send the target associated object to the client.

## Patentansprüche

1. Verfahren zur Beschaffung eines Objekts, umfassend:
Empfangen (11), durch einen Server, einer Anforderung von einem Client, wobei die Anforderung eine Kennungsinformation eines vom Client angeforderten Zielobjekts umfasst;
Bestimmen (12), gemäß der Kennungsinformation des Zielobjekts, ob das Zielobjekt ein oder mehrere assoziierte(s) Objekt(e) besitzt; und
**dadurch gekennzeichnet dass**, wenn das Zielobjekt ein oder mehrere zugeordnete(s) Objekt(e) besitzt, Hinzufügen (13) einer Assoziierungsanzeigeinformation zum Zielobjekt und Senden des Zielobjekts an den Client, so dass der Client weiter auf den Empfang von Daten wartet, nachdem er das Zielobjekt empfangen hat; wobei die Assoziierungsanzeigeinformation dazu dient dem Client anzuzeigen, dass das Zielobjekt ein oder mehrere assoziierte(s) Objekt(e) besitzt;
nach Abschluss des Sendens des Zielobjekts, Senden (14) einer Verifizierungsinformation an den Client, so dass der Client die assoziierten Objekte des Zielobjekts gemäß der Verifizierungsinformation verifiziert;
Empfangen, durch den Server, einer Verifikationsergebnisinformation vom Client;
Bestimmen (15), durch den Server, eines assoziierten Zielobjekts aus den assoziierten Objekten gemäß der Verifizierungsergebnisinformation vom Client; und
Senden (16) des assoziierten Zielobjekts an den Client.

2. Verfahren gemäß Anspruch 1, wobei das Bestimmen, gemäß der Kennungsinformation des Zielobjekts, ob das Zielobjekt ein oder mehrere assoziierte(s) Objekt(e) besitzt, umfasst:
Übertragen der Anforderung an eine Anwendung einer höheren Schicht, so dass die Anwendung der höheren Schicht gemäß der Kennungsinformation des Zielobjekts bestimmt, ob eine vorbestimmte Schnittstelle aufgerufen werden soll; und
Bestimmen, gemäß einer Aufrufsituation der vorbestimmten Schnittstelle, ob das Zielobjekt ein oder mehrere assoziierte(s) Objekt(e) besitzt.

3. Verfahren gemäß Anspruch 1, wobei das Bestimmen, gemäß der Kennungsinformation des Zielobjekts, ob das Zielobjekt ein oder mehrere assoziierte(s) Objekt(e) besitzt, umfasst:
Abfragen, gemäß der Kennungsinformation des Zielobjekts, einer Assoziierungstabelle, die zum Speichern von Informationen assoziierter Objekte des Zielobjekts dient, und Bestimmen, gemäß einem Abfrageergebnis, ob das Zielobjekt ein oder mehrere assoziierte(s) Objekt(e) besitzt.

4. Verfahren gemäß einem der Ansprüche 1 bis 3, wobei die Assoziierungsanzeigeinformation in einem letzten Rahmen des Zielobjekts enthalten ist.

5. Verfahren gemäß einem der Ansprüche 1 bis 3, wobei die Verifizierungsinformation eine Adressinformation und eine relative Ablaufzeit der assoziierten Objekte umfasst.

6. Verfahren nach einem der Ansprüche 1 bis 3, wobei:
die Verifizierungsergebnisinformation eine Adressinformation eines assoziierten Objekts umfasst, das nicht gesendet werden muss; und das Bestimmen, gemäß der Verifizierungsergebnisinformation des Clients, eines assoziierten Zielobjekts aus den assoziierten Objekten umfasst:
Entfernen, gemäß der Verifizierungsergebnisinformation, des assoziierten Objekts, das nicht an den Client gesendet werden muss, aus den assoziierten Objekten und Bestimmen eines verbleibenden assoziierten Objekts als ein assoziiertes Zielobjekt;
oder die Verifizierungsergebnisinformation eine Adressinformation eines assoziierten Objekts umfasst, das gesendet werden muss; und das Bestimmen, gemäß der Verifizierungsergebnisinformation des Clients, eines assoziierten Zielobjekts aus den assoziierten Objekten umfasst:
Bestätigen, gemäß der Adressinformation des assoziierten Objekts, das gesendet werden muss, der Richtigkeit der Verifizierungsergebnisinformation und Bestimmen eines assoziierten Zielobjekts aus den assoziierten Objekten gemäß einem Bestätigungsergebnis.

7. Verfahren zur Beschaffung eines Objekts, umfassend:
Senden (21), durch einen Client, einer Anforderung an einen Server, wobei die Anforderung eine Kennungsinformation eines angeforderten Zielobjekts umfasst;
Empfangen (22) eines Zielobjekts, das vom Server gesendet wird, nachdem der Server die Anforderung empfangen hat; und
**dadurch gekennzeichnet, dass** das Zielobjekt eine Assoziierungsanzeigeinformation trägt, wobei die Assoziierungsanzeigeinformation dazu dient anzuzeigen, dass das Zielobjekt ein oder mehrere assoziierte(s) Objekt(e) besitzt; und
ferner **gekennzeichnet durch** das Empfangen (23) einer Verifizierungsinformation der assoziierten Objekte, die vom Server gesendet wird; und
Verifizieren (24), **durch** den Client, der assoziierten Objekte gemäß der Verifizierungsinformation und Senden einer Verifizierungsergebnisinformation an den Server, so dass der Server gemäß der Verifizierungsergebnisinformation ein assoziiertes Zielobjekt bestimmt; und
Empfangen (25) des assoziierten Zielobjekts, das vom Server gesendet wird.

8. Verfahren gemäß Anspruch 7, wobei die Verifizierungsinformation der assoziierten Objekte eine Adressinformation und eine relative Ablaufzeit der assoziierten Objekte umfasst; und wobei das Verifizieren der assoziierten Objekte gemäß der Verifizierungsinformation umfasst:
Bestimmen, gemäß der Adressinformation der assoziierten Objekte, ob ein entsprechendes assoziiertes Objekt vorübergehend lokal gespeichert ist;
falls ein entsprechendes assoziiertes Objekt vorübergehend lokal gespeichert ist und eine Summe aus einer Daseinszeit des entsprechenden assoziierten Objekts und einer relativen Ablaufzeit des entsprechenden assoziierten Objekts größer ist als eine aktuelle Zeit, Bestimmen, dass der Server das entsprechende assoziierte Objekt nicht senden muss; oder
falls ein entsprechendes assoziiertes Objekt vorübergehend lokal gespeichert ist und eine Summe aus einer Daseinszeit des entsprechenden assoziierten Objekts und einer relativen Ablaufzeit des entsprechenden assoziierten Objekts kleiner ist als eine aktuelle Zeit, Bestimmen, dass der Server das entsprechende assoziierte Objekt senden muss.

9. Verfahren gemäß Anspruch 7 oder 8, wobei die Verifizierungsergebnisinformation umfasst: eine Adressinformation eines entsprechenden assoziierten Objekts, das vom Server nicht gesendet werden muss, oder eine Adressinformation eines entsprechenden assoziierten Objekts, das vom Server gesendet werden muss.

10. Server, umfassend:
eine Empfangseinheit (41), die ausgelegt ist zum Empfangen einer Anforderung von einem Client, wobei die Anforderung eine Kennungsinformation eines vom Client angeforderten Zielobjekts umfasst;
eine Beurteilungseinheit (42), die ausgelegt ist zum Bestimmen, gemäß der von der Empfangseinheit empfangenen Kennungsinformation des Zielobjekts, ob das Zielobjekt ein oder mehrere assoziierte(s) Objekt(e) besitzt;
eine Sendeeinheit (43), die ausgelegt ist zum: wenn die Beurteilungseinheit bestimmt, dass das Zielobjekt ein oder mehrere assoziierte(s) Objekt(e) besitzt, Hinzufügen einer Assoziierungsanzeigeinformation zum Zielobjekt und Senden des Zielobjekts an den Client, so dass der Client weiter auf den Empfang von Daten wartet, nachdem er das Zielobjekt empfangen hat, wobei die Assoziierungsanzeigeinformation dazu dient dem Client anzuzeigen, dass das Zielobjekt ein oder mehrere assoziierte(s) Objekt(e) besitzt; und nach Abschluss des Sendens des Zielobjekts, Senden einer Verifizierungsinformation an den Client, so dass der Client die assoziierten Objekte des Zielobjekts gemäß der Verifizierungsinformation verifiziert, und wobei die Empfangseinheit (41) ferner ausgelegt ist zum Empfangen der Verifizierungsergebnisinformation vom Client; und eine Auswahleinheit (44), die ausgelegt ist zum Bestimmen eines assoziierten Zielobjekts aus den assoziierten Objekten gemäß der von der Empfangseinheit empfangenen Verifizierungsergebnisinformation vom Client;
wobei:
die Sendeeinheit (43) ferner ausgelegt ist zum Senden des assoziierten Zielobjekts an den Client gemäß einem Verarbeitungsergebnis der Auswahleinheit.

11. Server gemäß Anspruch 10, wobei die Beurteilungseinheit umfasst:
ein Übertragungsmodul, das ausgelegt ist zum Übertragen der Anforderung an eine Anwendung einer höheren Schicht, so dass die Anwendung der höheren Schicht gemäß der Kennungsinformation des Zielobjekts bestimmt, ob eine vorbestimmte Schnittstelle aufgerufen werden soll; und
ein Verarbeitungsmodul, das ausgelegt ist zum Bestimmen, wenn die Anwendung der höheren Schicht die vorbestimmte Schnittstelle aufruft, dass das Zielobjekt ein oder mehrere assoziierte(s) Objekt(e) besitzt, und zum Bestimmen, wenn die Anwendung der höheren Schicht die vorbestimmte Schnittstelle nicht aufruft, dass das Zielobjekt keine assoziierten Objekte besitzt, wobei, wenn die Anwendung der höheren Schicht bestimmt, gemäß der Kennungsinformation des Zielobjekts, dass assoziierte Objekte vorhanden sind, die Anwendung der höheren Schicht die vorbestimmte Schnittstelle aufruft; und wenn die Anwendung der höheren Schicht bestimmt, gemäß der Kennungsinformation des Zielobjekts, dass keine assoziierten Objekte vorhanden sind, die Anwendung der höheren Schicht die vorbestimmte Schnittstelle nicht aufruft.

12. Server gemäß Anspruch 10, wobei die Beurteilungseinheit umfasst:
ein Abfragemodul, das ausgelegt ist zum Abfragen, gemäß der Kennungsinformation des Zielobjekts, einer Assoziierungstabelle, die zum Speichern von Informationen assoziierter Objekte des Zielobjekts dient; und
ein Verarbeitungsmodul, das ausgelegt ist zum Bestimmen, gemäß einem Abfrageergebnis des Abfragemoduls, ob das Zielobjekt ein oder mehrere assoziierte(s) Objekt(e) besitzt.

13. Server gemäß einem der Ansprüche 10 bis 12, wobei die Auswahleinheit insbesondere ausgelegt ist zum:
wenn die Verifizierungsergebnisinformation eine Adressinformation eines assoziierten Objekts umfasst, das nicht gesendet werden muss, Entfernen, gemäß der Verifizierungsergebnisinformation, des assoziierten Objekts, das nicht an den Client gesendet werden muss, aus den assoziierten Objekten und Bestimmen eines verbleibenden assoziierten Objekts als ein assoziiertes Zielobjekt;
oder, wenn die Verifizierungsergebnisinformation eine Adressinformation eines assoziierten Objekts umfasst, das gesendet werden muss, Bestätigen, gemäß der Adressinformation des assoziierten Objekts, das gesendet werden muss, der Richtigkeit der Verifizierungsergebnisinformation und Bestimmen eines assoziierten Zielobjekts aus den assoziierten Objekten gemäß einem Bestätigungsergebnis.

14. Client, umfassend:
eine Sendeeinheit (51), die ausgelegt ist zum Senden einer Anforderung an einen Server, wobei die Anforderung eine Kennungsinformation eines angeforderten Zielobjekts umfasst;
eine Empfangseinheit (52), die ausgelegt ist zum Empfangen eines Zielobjekts, das vom Server gesendet wird, nachdem der Server die Anforderung empfangen hat, wobei das Zielobjekt eine Assoziierungsanzeigeinformation trägt, wobei die Assoziierungsanzeigeinformation dazu dient anzuzeigen, dass das Zielobjekt ein oder mehrere assoziierte(s) Objekt(e) besitzt; und Empfangen einer Verifizierungsinformation der assoziierten Objekte, die vom Server gesendet wird; und
eine Verarbeitungseinheit (53), die ausgelegt ist zum Verifizieren der assoziierten Objekte gemäß der von der Empfangseinheit empfangenen Verifizierungsinformation; wobei:
die Sendeeinheit (51) ferner ausgelegt ist zum Senden einer Verifizierungsergebnisinformation an den Server gemäß einem Verifizierungsergebnis der Verarbeitungseinheit, so dass der Server gemäß der Verifizierungsergebnisinformation ein assoziiertes Zielobjekt bestimmt; und
die Empfangseinheit (52) ferner ausgelegt ist zum Empfangen des assoziierten Zielobjekts, das vom Server gesendet wird.

15. Client gemäß Anspruch 14, wobei die Verifizierungsinformation der assoziierten Objekte eine Adressinformation und eine relative Ablaufzeit der assoziierten Objekte umfasst; und
die Verarbeitungseinheit (53) umfasst:
ein Erkennungsmodul, das ausgelegt ist zum Bestimmen, gemäß der Adressinformation der assoziierten Objekte, ob der Client vorübergehend ein entsprechendes assoziiertes Objekt speichert;
ein Vergleichsmodul, das ausgelegt ist zum: wenn das Erkennungsmodul bestimmt, dass ein entsprechendes assoziiertes Objekt vorübergehend gespeichert ist, Vergleichen einer Summe aus einer Daseinszeit des entsprechenden assoziierten Objekts und einer relativen Ablaufzeit des entsprechenden assoziierten Objekts mit einer aktuellen Zeit; und
ein Bestimmungsmodul, das ausgelegt ist zum: wenn das Vergleichsmodul bestimmt, dass die Summe aus einer Daseinszeit des entsprechenden assoziierten Objekts und der relativen Ablaufzeit des entsprechenden assoziierten Objekts größer ist als eine aktuelle Zeit, Bestimmen, dass der Server das entsprechende assoziierte Objekt nicht senden muss; und wenn das Vergleichsmodul bestimmt, dass die Summe aus einer Daseinszeit des entsprechenden assoziierten Objekts und der relativen Ablaufzeit des entsprechenden assoziierten Objekts kleiner ist als eine aktuelle Zeit, Bestimmen, dass der Server das entsprechende assoziierte Objekt senden muss.

16. System zur Beschaffung eines Objekts, umfassend: einen Server (4) und einen Client (5), wobei:
der Server (4) ausgelegt ist zum: Empfangen einer Anforderung vom Client, wobei die Anforderung eine Kennungsinformation eines vom Client angeforderten Zielobjekts umfasst; Bestimmen, gemäß der Kennungsinformation des Zielobjekts, ob das Zielobjekt ein oder mehrere assoziierte(s) Objekt(e) besitzt; wenn bestimmt wird, dass das Zielobjekt ein oder mehrere assoziierte(s) Objekt(e) besitzt, Hinzufügen einer Assoziierungsanzeigeinformation zum Zielobjekt und Senden des Zielobjekts an den Client, und nach Abschluss des Sendens des Zielobjekts, Senden einer Verifizierungsinformation an den Client; wobei die Assoziierungsanzeigeinformation dazu dient dem Client anzuzeigen, dass das Zielobjekt ein oder mehrere assoziierte(s) Objekt(e) besitzt;
der Client (5) ausgelegt ist zum: Empfangen des Zielobjekts und der Verifizierungsinformation, die vom Server gesendet werden, Verifizieren der assoziierten Objekte gemäß der von der Empfangseinheit empfangenen Verifizierungsinformation und Senden einer Verifizierungsergebnisinformation an den Server gemäß einem Verifizierungsergebnis;
der Server ferner ausgelegt ist zum Empfangen der Verifizierungsergebnisinformation vom Client und Bestimmen eines assoziierten Zielobjekts gemäß der Verifizierungsergebnisinformation und Senden des assoziierten Zielobjekts an den Client.

## Revendications

1. Procédé permettant d'acquérir un objet, comprenant les étapes suivantes :
recevoir (11), par un serveur, une requête d'un client, la requête comportant des informations d'identifiant d'un objet cible demandé par le client ;
déterminer (12), selon les informations d'identifiant de l'objet cible, si l'objet cible a un ou plusieurs objets associés ; et
**caractérisé en ce que**, lorsque l'objet cible a un ou plusieurs objets associés, ajouter (13) des informations d'indication d'association à l'objet cible, et envoyer l'objet cible au client, afin que le client continue à attendre de recevoir des données après avoir reçu l'objet cible ; les informations d'indication d'association étant utilisées pour indiquer au client que l'objet cible a un ou plusieurs objets associés ;
après avoir fini d'envoyer l'objet cible, envoyer (14) des informations de vérification au client, pour que le client vérifie les objets associés de l'objet cible selon les informations de vérification ;
recevoir, par le serveur, des informations de résultat de vérification à partir du client ; déterminer (15), par le serveur, un objet associé cible à partir des objets associés selon les informations de résultat de vérification du client ; et
envoyer (16) l'objet associé cible au client.

2. Procédé selon la revendication 1, dans lequel l'étape consistant à déterminer, selon les informations d'identifiant de l'objet cible, si l'objet cible a un ou plusieurs objets associés comprend :
transférer la requête à une application de couche supérieure, pour que l'application de couche supérieure détermine, selon les informations d'identifiant de l'objet cible, s'il faut appeler une interface prédéterminée ; et
déterminer, selon une situation d'appel de l'interface prédéterminée, si l'objet cible a un ou plusieurs objets associés.

3. Procédé selon la revendication 1, dans lequel l'étape consistant à déterminer, selon les informations d'identifiant de l'objet cible, si l'objet cible a un ou plusieurs objets associés comprend :
interroger, selon les informations d'identifiant de l'objet cible, une table d'associations utilisée pour stocker des informations d'objets associés de l'objet cible, et déterminer, selon un résultat de demande, si l'objet cible a un ou plusieurs objets associés.

4. Procédé selon l'une quelconque des revendications 1 à 3, dans lequel les informations d'indication d'association sont situées dans une dernière trame de l'objet cible.

5. Procédé selon l'une quelconque des revendications 1 à 3, dans lequel les informations de vérification comprennent des informations d'adresse et un temps d'expiration relatif des objets associés.

6. Procédé selon l'une quelconque des revendications 1 à 3, dans lequel :
les informations de résultat de vérification comprennent des informations d'adresse d'un objet associé qui ne doit pas être envoyé ; et l'étape consistant à déterminer, selon des informations de résultat de vérification du client, un objet associé cible à partir des objets associés comprend :
supprimer, selon les informations de résultat de vérification, l'objet associé qui ne doit pas être envoyé au client à partir des objets associés, et déterminer un objet associé restant comme un objet associé cible ;
ou, les informations de résultat de vérification comprennent des informations d'adresse d'un objet associé qui doit être envoyé ; et l'étape consistant à déterminer, selon des informations de résultat de vérification du client, un objet associé cible à partir des objets associés comprend :
confirmer, selon les informations d'adresse de l'objet associé qui doit être envoyé, la précision des informations de résultat de vérification, et déterminer un objet associé cible à partir des objets associés selon un résultat de confirmation.

7. Procédé permettant d'acquérir un objet, comprenant les étapes suivantes :
envoyer (21), par un client, une requête à un serveur, la requête comportant des informations d'identifiant d'un objet cible demandé ;
recevoir (22) un objet cible qui est envoyé par le serveur après que le serveur a reçu la requête ; et
**caractérisé en ce que** l'objet cible contient des informations d'indication d'association, les informations d'indication d'association étant utilisées pour indiquer que l'objet cible a un ou plusieurs objets associés ; et
**caractérisé en outre par** recevoir (23) des informations de vérification des objets associés qui sont envoyés par le serveur ; et
vérifier (24), par le client, les objets associés selon les informations de vérification, et envoyer des informations de résultat de vérification au serveur, pour que le serveur détermine un objet associé cible selon les informations de résultat de vérification ; et
recevoir (25) l'objet associé cible envoyé par le serveur.

8. Procédé selon la revendication 7, dans lequel les informations de vérification des objets associés comprennent des informations d'adresse et un temps d'expiration relatif des objets associés ; et l'étape consistant à vérifier les objets associés selon les informations de vérification comprend :
déterminer, selon les informations d'adresse des objets associés, si un objet associé correspondant est temporairement stocké localement ;
si un objet associé correspondant est stocké temporairement localement et une somme d'un temps d'existence de l'objet associé correspondant et d'un temps d'expiration relatif de l'objet associé correspondant est supérieure à un temps courant, déterminer que le serveur ne doit pas envoyer l'objet associé correspondant ; ou
si un objet associé correspondant est stocké temporairement localement et une somme d'un temps d'existence de l'objet associé correspondant et d'un temps d'expiration relatif de l'objet associé correspondant est inférieure à un temps courant, déterminer que le serveur doit envoyer l'objet associé correspondant.

9. Procédé selon la revendication 7 ou 8, dans lequel les informations de résultat de vérification comprennent :
des informations d'adresse d'un objet associé correspondant qui ne doit pas être envoyé par le serveur ou des informations d'adresse d'un objet associé correspondant qui doit être envoyé par le serveur.

10. Serveur, comprenant :
une unité de réception (41), configurée pour recevoir une requête d'un client, la requête comportant des informations d'identifiant d'un objet cible demandé par le client ;
une unité de jugement (42), configurée pour déterminer, selon les informations d'identifiant de l'objet cible reçu par l'unité de réception, si l'objet cible a un ou plusieurs objets associés ;
une unité d'envoi (43), configurée pour : lorsque l'unité de jugement détermine que l'objet cible a un ou plusieurs objets associés, ajouter des informations d'indication d'association à l'objet cible, et envoyer l'objet cible au client, pour que le client continue à attendre de recevoir des données après avoir reçu l'objet cible, les informations d'indication d'association étant utilisées pour indiquer au client que l'objet cible a un ou plusieurs objets associés ; et après avoir terminé d'envoyer l'objet cible, envoyer des informations de vérification au client, pour que le client vérifie les objets associés de l'objet cible selon les informations de vérification, et l'unité de réception (41) étant en outre configurée pour recevoir des informations de résultat de vérification à partir du client ; et
une unité de sélection (44), configurée pour déterminer un objet associé cible à partir des objets associés selon les informations de résultat de vérification du client reçues par l'unité de réception ;
l'unité d'envoi (43) étant en outre configurée pour envoyer l'objet associé cible au client selon un résultat de traitement de l'unité de sélection.

11. Serveur selon la revendication 10, dans lequel l'unité de jugement comprend :
un module de transfert, configuré pour transférer la requête à une application de couche supérieure, pour que l'application de couche supérieure détermine, selon les informations d'identifiant de l'objet cible, s'il faut appeler une interface prédéterminée ; et
un module de traitement, configuré pour déterminer, lorsque l'application de couche supérieure appelle l'interface prédéterminée, que l'objet cible a un ou plusieurs objets associés, et déterminer, lorsque l'application de couche supérieure n'appelle pas l'interface prédéterminée, que l'objet cible n'a pas d'objets associés, lorsque l'application de couche supérieure détermine, selon les informations d'identifiant de l'objet cible, qu'il y a des objets associés, l'application de couche supérieure appelant l'interface prédéterminée ; et lorsque l'application de couche supérieure détermine, selon les informations d'identifiant de l'objet cible, qu'il n'y a pas d'objets associés, l'application de couche supérieure n'appelant pas l'interface prédéterminée.

12. Serveur selon la revendication 10, dans lequel l'unité de jugement comprend :
un module d'interrogation, configuré pour interroger, selon les informations d'identifiant de l'objet cible, une table d'associations utilisée pour stocker des informations d'objets associés de l'objet cible ; et
un module de traitement, configuré pour déterminer, selon un résultat de demande du module d'interrogation, si l'objet cible a un ou plusieurs objets associés.

13. Serveur selon l'une quelconque des revendications 10 à 12, dans lequel l'unité de sélection est configurée spécifiquement pour :
lorsque les informations de résultat de vérification comprennent des informations d'adresse d'un objet associé qui ne doit pas être envoyé, supprimer, selon les informations de résultat de vérification, l'objet associé qui ne doit pas être envoyé au client à partir des objets associés, et déterminer un objet associé restant comme un objet associé cible ;
ou, lorsque les informations de résultat de vérification comprennent des informations d'adresse d'un objet associé qui doit être envoyé, confirmer, selon les informations d'adresse d'un objet associé qui doit être envoyé, la précision des informations de résultat de vérification, et déterminer un objet associé cible à partir des objets associés selon un résultat de confirmation.

14. Client, comprenant :
une unité d'envoi (51), configurée pour envoyer une requête à un serveur, la requête comportant des informations d'identifiant d'un objet cible demandé ;
une unité de réception (52), configurée pour recevoir un objet cible qui est envoyé par le serveur après que le serveur a reçu la requête, l'objet cible contenant des informations d'indication d'association, les informations d'indication d'association étant utilisées pour indiquer que l'objet cible a un ou plusieurs objets associés ; et recevoir des informations de vérification des objets associés envoyés par le serveur ; et
une unité de traitement (53), configurée pour vérifier les objets associés selon les informations de vérification reçues par l'unité de réception ;
l'unité d'envoi (51) étant en outre configurée pour envoyer des informations de résultat de vérification au serveur selon un résultat de vérification de l'unité de traitement, pour que le serveur détermine un objet associé cible selon les informations de résultat de vérification ; et
l'unité de réception (52) étant en outre configurée pour recevoir l'objet associé cible envoyé par le serveur.

15. Client selon la revendication 14, dans lequel les informations de vérification des objets associés comprennent des informations d'adresse et un temps d'expiration relatif des objets associés ; et
l'unité de traitement (53) comprend :
un module de détection, configuré pour déterminer, selon les informations d'adresse des objets associés, si le client stocke temporairement un objet associé correspondant ;
un module de comparaison, configuré pour : lorsque le module de détection détermine qu'un objet associé correspondant est stocké temporairement, comparer une somme d'un temps d'existence de l'objet associé correspondant et d'un temps d'expiration relatif de l'objet associé correspondant avec un temps courant ; et
un module de détermination, configuré pour : lorsque le module de comparaison détermine que la somme du temps d'existence de l'objet associé correspondant et du temps d'expiration relatif de l'objet associé correspondant est supérieure au temps courant, déterminer que le serveur ne doit pas envoyer l'objet associé correspondant ;
et lorsque le module de comparaison détermine que la somme du temps d'existence de l'objet associé correspondant et du temps d'expiration relatif de l'objet associé correspondant est inférieure au temps courant, déterminer que le serveur doit envoyer l'objet associé correspondant.

16. Système permettant d'acquérir un objet, comprenant : un serveur (4) et un client (5), dans lequel :
le serveur (4) est conçu pour : recevoir une requête du client, la requête comportant des informations d'identifiant d'un objet cible demandé par le client ; déterminer, selon les informations d'identifiant de l'objet cible, si l'objet cible a un ou plusieurs objets associés ; lorsqu'il est déterminé que l'objet cible a un ou plusieurs objets associés, ajouter des informations d'indication d'association à l'objet cible, et envoyer l'objet cible au client, et après avoir terminé d'envoyer l'objet cible, envoyer des informations de vérification au client ; les informations d'indication d'association étant utilisées pour indiquer au client que l'objet cible a un ou plusieurs objets associés ;
le client (5) est conçu pour : recevoir l'objet cible et des informations de vérification qui sont envoyées par le serveur, vérifier les objets associés selon les informations de vérification reçues par l'unité de réception, et envoyer des informations de résultat de vérification au serveur selon un résultat de vérification ;
le serveur est en outre conçu pour recevoir des informations de résultat de vérification à partir du client et déterminer un objet associé cible selon les informations de résultat de vérification et envoyer l'objet associé cible au client.
